# EUROPÄISCHE PATENTANMELDUNG

(11) **EP 1 401 080 A1**
(43) Veröffentlichungstag der Anmeldung: **24.03.2004**
(21) Anmeldenummer: 03020158.6
(22) Anmeldetag: 05.09.2003
(51) Int. Cl.: H02J 7/14

(54) **Impedanzanordnung zur Reduzierung der Generatorwelligkeit**

(30) Priorität: 20.09.2002 DE 10243982
(71) Anmelder: ROBERT BOSCH GMBH, 70442 Stuttgart (DE)
(72) Erfinder: Schuster, Dirk, 71394 Kernen (DE); Wolf, Gert, 71563 Affalterbach (DE); Suelzle, Helmut, 71691 Freiberg (DE); Beck, Markus, 71711 Steinheim (DE); Mueller, Markus, 74078 Heilbronn (DE)

(57) **Zusammenfassung**

Die Erfindung betrifft einen Generator (1), insbesondere zur Versorgung eines Kfz-Bordnetzes, der eine Ausgangsspannung (U) mit einer vorgegebenen Welligkeit erzeugt. Zur Dämpfung der Welligkeit der Ausgangsspannung U wird vorgeschlagen, den Generator (1) mit einer Impedanzanordnung (2) zu versehen, die vorzugsweise unmittelbar parallel zum Generator (1) angeschlossen ist.

## Beschreibung

Die Erfindung betrifft einen Generator, insbesondere einen Fahrzeuggenerator zur Versorgung eines Kfz-Bordnetzes, gemäß dem Oberbegriff des Patentanspruchs 1.

In der Kfz-Technik werden üblicherweise Drehstromgeneratoren eingesetzt, um die im Bordnetz angeschlossenen Verbraucher mit elektrischer Leistung zu versorgen. Zur Erzeugung der für das Bordnetz erforderlichen Gleichspannung (z.B. 14 V) umfaßt der Fahrzeuggenerator einen Umrichter, der i.d.R. als 3-Phasen-Brückengleichrichter ausgebildet ist.

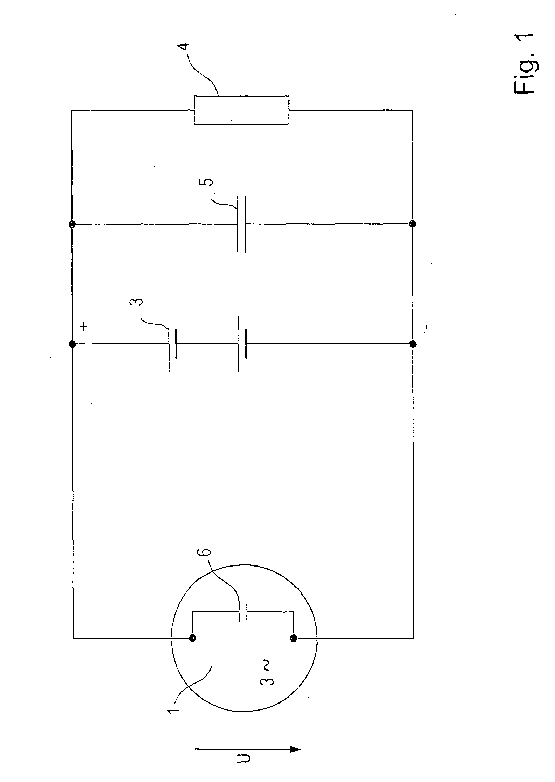

Fig. 1 zeigt eine schematische Darstellung eines Kfz-Bordnetzes mit mehreren Verbrauchern 4, die von einem Generator 1 und einer Batterie 3 mit elektrischer Leistung versorgt werden. Die im Bordnetz angeschlossenen Verbraucher sind hier exemplarisch als ein Verbraucher 4 dargestellt.

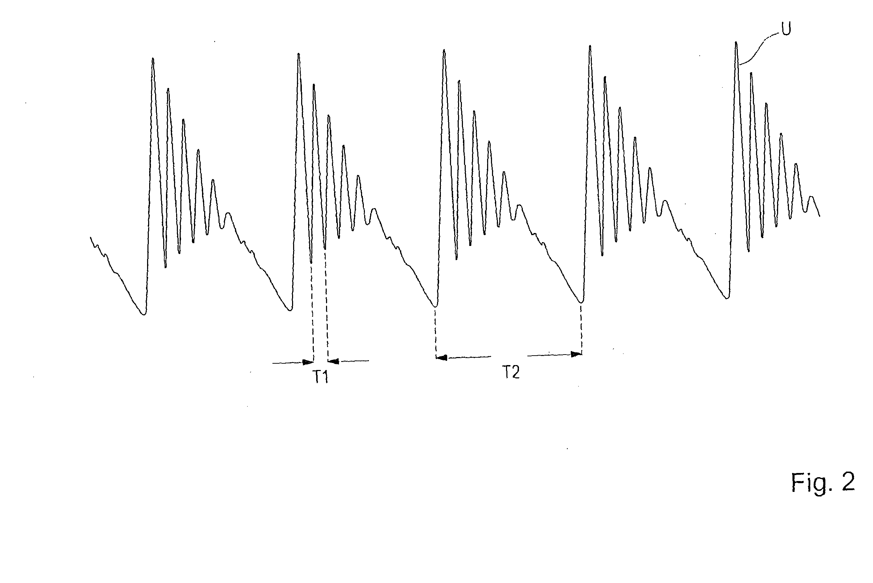

Der Drehstromgenerator 1 erzeugt an seinem Ausgang (nach der Gleichrichtung) eine Gleichspannung U. Die Gleichspannung U hat dabei eine durch die Auslegung der Generatoranordnung bedingte Welligkeit, wie sie in Fig. 2 dargestellt ist.

Fig. 2 zeigt die Ausgangsspannung U des Generators 1, die von einer Wechselspannung überlagert ist (Welligkeit). Dabei sind im wesentlichen zwei Überlagerungsfrequenzen mit unterschiedlichen Periodendauern T1, T2 zu erkennen. Ursache für die Welligkeit sind im wesentlichen zwei Faktoren: Zum einen der Einfluss der Brückengleichrichtung, welche einen Welligkeitsbeitrag mit der längeren Periodendauer T2 liefert, und zum anderen das Umschalten von Gleichrichterdioden des Gleichrichters, das einen Welligkeitsanteil mit der kleineren Zeitkonstante T1 liefert. Je nach Generatorgröße, -Drehzahl, - Strom, Bordnetzauslegung etc. kann die vom Generator 1 erzeugte Spannung U um mehrere Volt schwanken.

Insbesondere im Bordnetz angeschlossene Steuergeräte reagieren oftmals ungünstig auf solche Spannungsschwankungen und können im schlimmsten Fall sogar ausfallen.

Zur Reduzierung der Welligkeit ist es bekannt, derartige Steuergeräte, die sich üblicherweise im Motorraum befinden, mit kurzen Leitungen an einem gemeinsamen Kontenpunkt anzuschließen und die Welligkeit mit einem sehr großen Elektrolytkondensator 5 zu glätten (siehe Fig. 1). Der Kondensator kann dabei Kapazitäten von mehreren tausend µF (z.B. 70.000 µF) aufweisen. Derartige Kondensatoren sind jedoch relativ groß und teuer. Darüber hinaus ist die Welligkeit an anderen Knotenpunkten des Netzes weiterhin vorhanden.

Es ist daher die Aufgabe der vorliegenden Erfindung, die Welligkeit der von einem Generator erzeugten Ausgangsspannung mit wesentlich einfacheren und kostengünstigeren Mitteln zu glätten.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Der wesentliche Gedanke der Erfindung besteht darin, einen Generator mit einer Impedanzanordnung zur Reduzierung der Welligkeit zu versehen, die vorzugsweise direkt am Generator, parallel zu diesem, angeschlossen ist. Durch die Impedanzanordnung ist es möglich, die Welligkeit der Ausgangsspannung direkt an der Quelle ihrer Entstehung, nämlich dem Generator, zu dämpfen.

Die Impedanzanordnung kann entweder im Generatorgehäuse integriert sein oder durch eine externe Beschaltung realisiert werden.

Die Impedanzanordnung umfasst vorzugsweise eine Widerstands/Kondensator-Schaltung (RC-Schaltung), insbesondere eine RC-Reihenschaltung.

Der Generator kann ferner eine Entstörkapazität zur Beseitigung von Rundfunkfrequenzen umfassen. Die Impedanzanordnung ist in diesem Fall vorzugsweise parallel zur Entstörkapazität geschaltet.

Die Erfindung wird nachstehend anhand der beigefügten Zeichnungen beispielhaft näher erläutert. Es zeigen:
Fig. 1 eine Prinzipdarstellung eines Kfz-Bordnetzes, bei dem die Spannungswelligkeit mittels eines Elektrolytkondensators gedämpft wird;
Fig. 2 den Verlauf der Ausgangsspannung eines Generators;
Fig. 3 eine schematische Ansicht eines Kfz-Bordnetzes mit einem Generator und einer Impedanzanordnung gemäß einer Ausführungsform der Erfindung;
Fig. 4 eine spezielle Ausführungsform einer Impedanzanordnung von Fig. 3; und
Fig. 5 den Verlauf der Ausgangsspannung bei Verwendung einer Impedanzanordnung gemäß einer Ausführungsform der Erfindung.

Bezüglich der Erläuterung der Fig. 1 und 2 wird auf die Beschreibungseinleitung verwiesen.

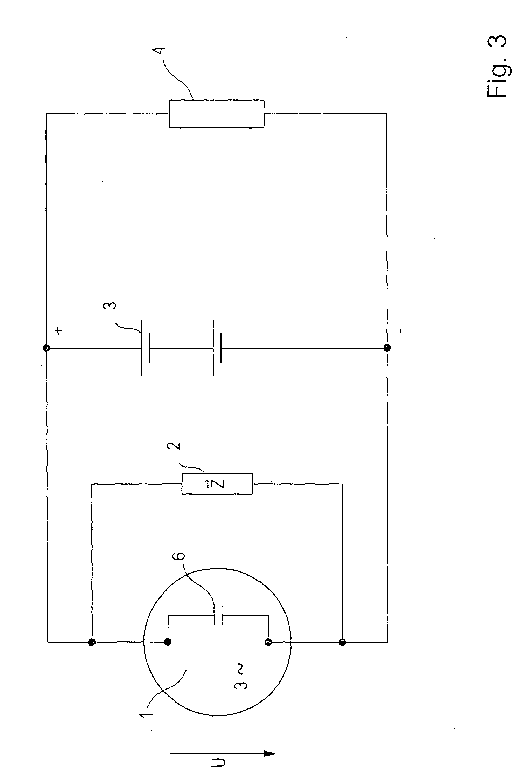

Fig. 3 zeigt eine schematische Darstellung eines Kfz-Bordnetzes mit mehreren Verbrauchern 4, die von einem Generator 1 und einer Batterie 3 mit elektrischer Leistung versorgt werden. Der Generator 1 ist in diesem Fall ein Drehstromgenerator, der eine 3-phasige Wechselspannung erzeugt, die von einem im Generator 1 enthaltenen Gleichrichter (nicht gezeigt) gleichgerichtet wird. An den Ausgängen des Generators 1 wird somit eine Gleichspannung U zur Versorgung der Verbraucher 4 bereitgestellt.

Der Generator 1 umfaßt ferner einen Entstörkondensator 6 zur Beseitigung von Rundfunkfrequenzen.

Wie erwähnt, besitzt die Ausgangsspannung U eine systemabhängige Welligkeit (siehe Fig. 2). Zur Reduzierung der Welligkeit ist eine Impedanzanordnung 2 vorgesehen, die parallel zum Generator 1 angeschlossen ist. Vorzugsweise ist die Impedanzanordnung 2 direkt am Ausgang des Generators 1 angeschlossen oder liegt zumindest näher am Generator 1 als an den Verbrauchern 4. Durch diese Anordnung kann die Welligkeit der Ausgangsspannung unmittelbar am Ort ihrer Entstehung beseitigt werden. Im gesamten nachgeordneten Netz herrscht somit eine Spannung mit geringerer Welligkeit.

Die Impedanzanordnung 2 kann dabei entweder als externe Beschaltung, wie dargestellt, realisiert oder im Gehäuse des Generators 1 integriert sein.

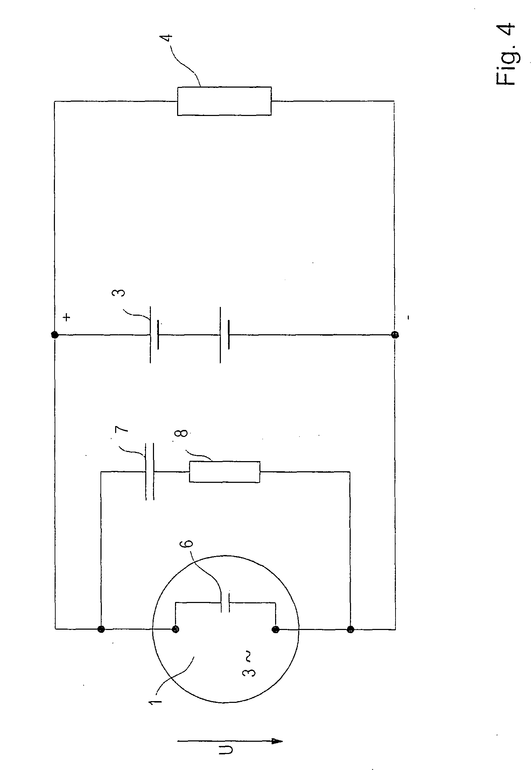

Fig. 4 zeigt eine mögliche Ausführungsform der Impedanzanordnung 2, bestehend aus einer RC-Reihenschaltung mit einem Kondensator 7 und einem Widerstand 8. Der Kondensator 7 hat beispielsweise eine Kapazität von 20 µF und der Widerstand 8 einen Widerstand von z.B. 0,5 Ohm. Die genannten Werte sind nur beispielhaft zu verstehen. Die Dimensionierung der Bauelemente ist an das jeweilige Bordnetz bzw. an die jeweilige Beschaltung des Generators derart anzupassen, dass eine möglichst große Dämpfungswirkung erzielt wird.

Mit der dargestellten Dimensionierung der Bauelemente 7,8 ist es möglich, die Welligkeit der Ausgangsspannung U um ca. 30-40% zu dämpfen.

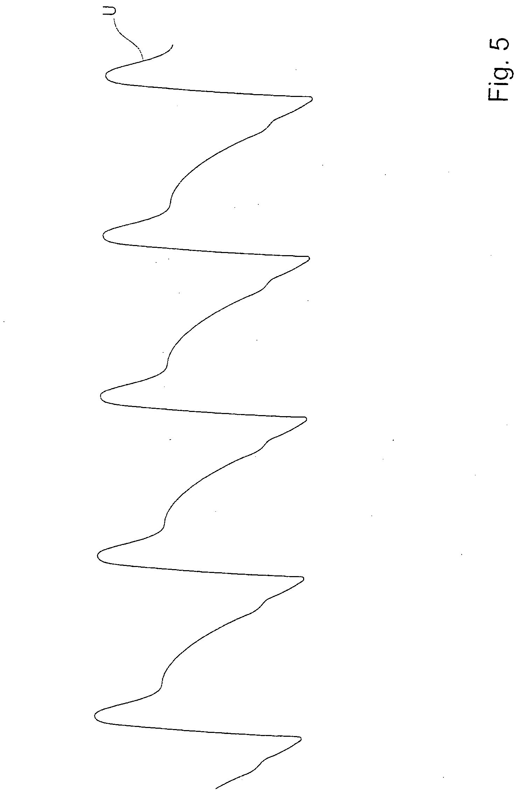

Der Verlauf der geglätteten Ausgangsspannung U ist in Fig. 5 dargestellt. Dabei ist zu erkennen, dass vor allem die Wechselspannung mit der kurzen Periodendauer T1 nahezu vollständig beseitigt werden kann.

### Bezugszeichenliste

- 1: Generator
- 2: Impedanzanordnung
- 3: Batterie
- 4: Verbraucher
- 5: Elektrolytkondensator
- 6: Entstörkondensator
- 7: Kondensator
- 8: Widerstand
- T1, T2: Periodendauer

## Patentansprüche

1. Generator, insbesondere zur Versorgung eines Kfz-Bordnetzes, der eine Ausgangsspannung (U) mit einer vorgegebenen Welligkeit erzeugt, **dadurch gekennzeichnet, dass** der Generator (1) mit einer Impedanzanordnung (2) zur Reduzierung der Welligkeit der Ausgangsspannung (U) versehen ist.

2. Generator nach Anspruch 1, **dadurch gekennzeichnet, dass** die Impedanzanordnung (2) eine RC-Schaltung umfaßt.

3. Generator nach Anspruch 2, **dadurch gekennzeichnet, dass** die Impedanzanordnung (2) eine RC-Reihenschaltung (7,8) umf aßt .

4. Generator nach einem der vorhergehenden Ansprüche, **dadurch gekennzeichnet, dass** die Impedanzanordnung (2) unmittelbar am Generator (1) angeschlossen ist.

5. Generator nach einem der vorhergehenden Ansprüche, **dadurch gekennzeichnet, dass** der Generator (1) eine Entstörkapazität (6) zur Beseitigung von Rundfunkfrequenzen aufweist.

6. Generator nach Anspruch 5, **dadurch gekennzeichnet, dass** die Impedanzanordnung (2) parallel zur Entstörkapazität (6) angeordnet ist.

7. Generator nach einem der vorhergehenden Ansprüche, **dadurch gekennzeichnet, dass** die Impedanzanordnung (2) im Generator (1) integriert ist.
